# EUROPEAN PATENT APPLICATION

(11) **EP 0 929 166 A2**
(43) Date of publication of application: **14.07.1999**
(21) Application number: 98124815.6
(22) Date of filing: 30.12.1998
(51) Int. Cl.: H04J 14/02, H04B 10/145

(54) **Light wave network system using single reference light signal**

(30) Priority: 08.01.1998 JP 1331798
(71) Applicant: NEC CORPORATION, Tokyo (JP)
(72) Inventor: Chikuma, Tadayuki, Minato-ku, Tokyo (JP)
(74) Representative: VOSSIUS & PARTNER

(57) **Abstract**

A light wave network system includes a reference terminal station (A station) and a plurality of terminal stations (B to E stations). The reference terminal station generates a reference light signal. Each of the plurality of terminal stations receives a transmission data light signal from another one of the plurality of terminal stations to separate the reference light signal, and controls a wavelength of each of first light data signals based on the separated reference light signal. Then, the terminal station multiplexes the separated reference light signal and the first light data signals to generate a transmission data light signal to output to one or more of the plurality of terminal stations.

## Description

The present invention relates to a light transmission system, and more particularly to a light wave network system in which a plurality of light signals are multiplexed in wavelength on a same wavelength band.

As a light transmission system, at first, a time divisional transmission system is adopted. However, various new systems are proposed to increase the transmission capacity and to extend a transmission distance. For instance, the system that a transmission rate is increased to 10 Gb/s or more, the system adopting a wavelength multiplexing system, and the system adopting a linear relay transmission system using a light amplifier are come into a practical use.

Conventionally, in a light wave network system in which a plurality of light signals are multiplexed in wavelength on a same wavelength band, a light add drop multiplexer (light ADM) is used to add or drop a light signal having an optional wavelength. Also, there are adopted a light path cross-connection system in which a light signal is cross-connected as it is, and a narrow band wavelength division multiplexing system (NB-WDM system) in which light signals are multiplexed in wavelength on a same wavelength band.

The light ADM can convert a light signal without converting the light signal into an electric signal and can be typically realized as follows. A pair of light separating unit and light combining unit are provided as a node 1 in a light transmission path from a node 2 to a node 3. For example, a light signal with the wavelength of λ1 is taken out or dropped from the light signals with the wavelengths of λ1 to λn transmitted from the node 2 by the light separating unit and the taken out light signal is set as an output of the node 1. On the other hand, a light signal with the same wavelength λ1' as the wavelength λ1 of the light signal inputted to the node 1 is multiplexed or added with the light signals with the wavelengths of λ2 to λn which are taken out by the light separating unit and then outputted to the next node 3. In this way, the light signal which is necessary for the nodes can be directly taken out and be multiplexed without converting the light signal into an electric signal.

The light path cross-connection system is different from a conventional point-to-point light transmission system. The light path cross-connection system is the system in which the switching of path on the light wave network is performed without converting the light signal. Examples of this technique are mentioned in Japanese Laid Open Patent Application (JP-A-Heisei 8-195972) and Japanese Laid Open Patent Application (JP-A-Heisei 9-74577). In these examples, a routing section and a bypass section are provided. The routing section converts a light signal flowing through a light transmission path into a light signal with an auxiliary wavelength to transmit on a different light transmission path. Thus, even if there is a fault on the light transmission path, it is possible to right transmit the light signal.

The NB-WDM system is the transmission system in which a plurality of signals with different wavelengths are multiplexed in wavelength on a same wavelength band and collectively transmitted.

The wavelength band used in the light wave system is limited based on the characteristics of various factors such as the wavelength band of an optical fiber as a transmission medium, a laser diode LD as a light source, and a PIN-type photodiode (PIN-PD) and an avalanche multiplying type photodiode (APD) as light receiving devices. Therefore, the wavelength interval between adjacent light signals is narrowed in each system as the number of light signals to be multiplexed or the number of light signals to be used in the network increases. Also, in the linear relay system using a light amplifier, the amplified wavelength band of the light signal is determined based on the wavelength band of the light amplifier. For this reason, when 32 light wave signals are multiplexed, the wavelength interval becomes about 0.8 nm. In the conventional wavelength control system, it is difficult to sufficiently prevent cross-talk because of the wavelength precision of 1 nm or below. Also, in case of adding/dropping of an optional wavelength as in the light ADM, a diffraction grating is used or a filter system is used. In any case, however, the multiplexing and separation of the light signal are performed based on the wavelength of the light signal.

Also, in the case to perform the linear relay specially, it is necessary to decrease the output deviation among the light signals to 1 dB or below. This is because a large output difference is finally generated among the light signals so that it becomes difficult to prevent the cross-talk between the light signals with the adjacent wavelengths, when the light signals are relayed over many stages.

With the introduction of these new systems, the output level and wavelength of the light transmission signal need to be controlled in a precise level, which does not cause any problem in the conventional system.

For example, the light output level is permissible in about several-dB width on the transmission side in the conventional reproduction relay. However, it is necessary to suppress the output deviation to about 1 dB between the wavelengths when the wavelength multiplexing linear relay transmission. Also, the light wavelength needs to be controlled within any error of 0.1 nm or less when the light signals having the wavelength interval of about 0.4 nm are multiplexed. As a result, it indicates that it is difficult to perform enough wavelength control only by the conventional temperature control of a laser diode of a light transmitter.

In order to solve the above problems, a network monitor is provided in each of stations of the light wave network system to collectively monitor these data. In case of using such a network monitor, it is necessary that calibration is always performed by use of a reference light source for improvement of accuracy so that the monitor himself can be stabilized. However, when the number of stations increases in the light wave network system, the arrangement of the reference light source for each station introduces cost increase and the wave lengths of the reference light signals are different in the respective stations.

The present invention is accomplished to solve the above problems. Therefore, an object of the present invention is to provide a light wave network system in which a light wavelength can be right adjusted in the light wave network having a plurality of nodes (terminal stations).

Also, it is another object of the present invention to provide a terminal station for the above light wave network system.

In order to achieve an aspect of the present invention, a light wave network system includes a plurality of terminal stations. Each of the plurality of terminal stations receives a transmission data light signal from another one of the plurality of terminal stations to separate the reference light signal, and controls a wavelength of each of first light data signals based on the separated reference light signal. Then, the terminal station multiplexes the separated reference light signal and the first light data signals to generate a transmission data light signal to output to one or more of the plurality of terminal stations.

The light wave network system may further includes a reference terminal station. The reference terminal station generates the reference light signal, controls a wavelength of second light data signals based on the generated reference light signal, and multiplexes the generated reference light signal and the first light data signals to generate a first transmission data light signal to output to one or more of the plurality of terminal stations other than the reference terminal station.

In this case, the terminal station may include a plurality of light transmitters, each of which generates the first light data signal, a coupler for separating the reference light signal from the transmission data light signal, and multiplexing the plurality of first light data signals from the plurality of light transmitters and the separated reference light signal to generate to generate the transmission data light signal, and a network monitor for controlling the wavelength of each of the first light data signals based on the separated reference light signal.

Also, the reference terminal station may include a plurality of light transmitters, each of which generates the second light data signal;
a reference signal generator for generating the reference light signal, a coupler for multiplexing the plurality of second light data signals from the plurality of light transmitters and the separated reference light signal to generate to generate the transmission data light signal, a network monitor for controlling the wavelength of each of the first light data signals based on the separated reference light signal, and an optical brancher for separating the reference light signal supply to the coupler and the network monitor.

The network monitor receives each of the first light data signals from the plurality of light transmitters and adjusts the wavelength of the received first light data signal to have a predetermined difference from a wavelength of the reference light signal.

Each of the plurality of terminal stations may controls a transmission output power of each of the first light data signals based on the received reference light signal. In addition, each of the plurality of terminal stations may controls a signal noise ratio (SNR) of each of the first light data signals based on the received reference light signal such that the signal noise ratio falls within in a predetermined range.

In order to achieve another aspect of the present invention, a method of transmitting a light signal in a light wave network system, includes the steps of:
in each of a plurality of terminal stations, receiving a transmission data light signal from another one of the plurality of terminal stations to separate a reference light signal from the received transmission data light signal;
controlling a wavelength of each of first light data signals based on the separated reference light signal; and
multiplexing the separated reference light signal and the first light data signals to generate a transmission data light.

The method may further generating the reference light signal.

In addition, the controlling step may include controlling a transmission output power of each of the first light data signals in addition of the wavelength of the first light data signal based on the received reference light signal. Also, the controlling step may include controlling a signal noise ratio of each of the first light data signals in addition of the wavelength of the first light data signal based on the received reference light signal.

A light wave network system using terminal stations of the present invention will be described below in detail with reference to the attached drawings.
Fig. 1 is a block diagram illustrating the structure of a light wave network system of an embodiment of the present invention;
Fig. 2 is a circuit block diagram illustrating the structure of a reference terminal station A in the embodiment of the present invention; and
Fig. 3 is a circuit block diagram illustrating the structure of a general terminal station in the embodiment of the present invention.

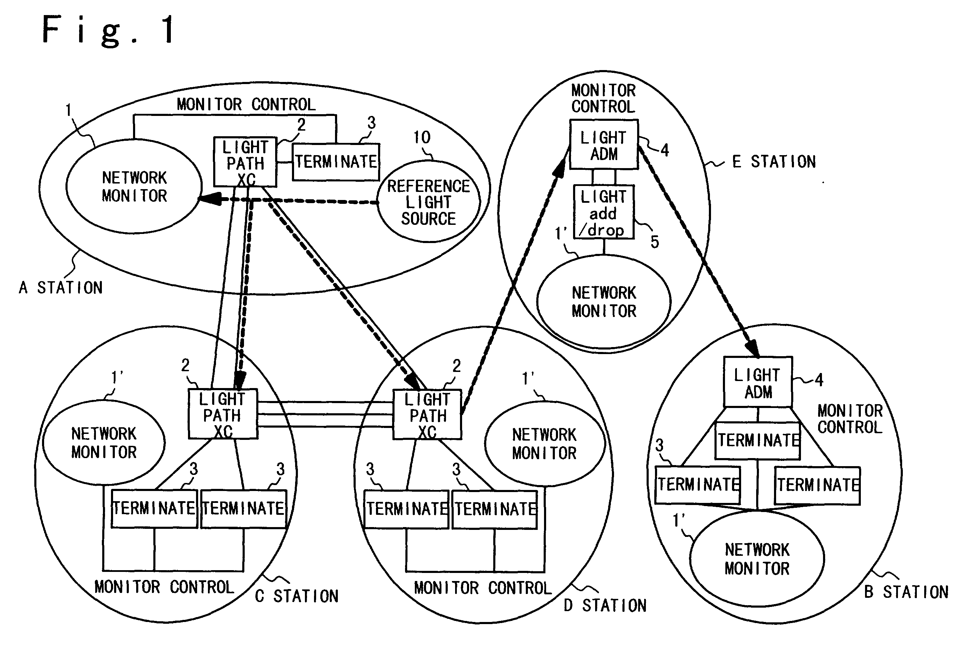

Fig. 1 is a block diagram illustrating the structure of the light wave network system of an embodiment of the present invention. Referring to Fig. 1, the light wave network system in the embodiment is composed of five terminal stations from an A station to an E station which are connected by light transmission paths such as optical cables. In this case, the A station functions as a reference terminal station of this network and remaining four terminal stations from the B station to the E station functions as general terminal stations.

The reference terminal station A is composed of a network monitor 1, a reference light source 10, a light path exchanging section (light cross-connecting section) 2, and a light signal terminating section 3. The reference light source 10 generates a reference light signal with a predetermined stable wavelength. The network monitor 1 monitors the wavelengths of light signals transmitted from the terminal station A based on the reference light signal generated by the reference light source 10. The light path exchanging section 2 exchanges light signals with another station.

The general terminal station B is composed of a network monitor 1' , a light ADM 4 and light signal terminating sections 3. Each of the general terminal stations C and D is composed of a network monitor 1' , a light path exchanging section 2 and light signal terminating sections 3. The general terminal station E is composed of a network monitor 1' , a light ADM (the above-mentioned light add drop multiplexer) 4 and a light add/drop section 3. The light add/drop section 5 adds or drops a light signal with an optional wavelength to or from a light transmission signal.

Each of the general terminal stations B, C, D and E does not have any reference light source 10 in its own station. The network monitor 1' monitors the wavelengths of light signals to be transmitted from its own station, based on the reference light signal which has been sent from the reference terminal station A.

The reference light source 10 generates a reference light signal with a sufficiently stable wavelength. For such a reference light source is used an absorption spectrum of HCN gas with the light emission wavelength of 1552.46 nm. A HCN gas laser can be easily locked in wavelength and generates the light output which is always stable. Therefore, the HCN gas laser is optimal as the reference light source. However, another light source may be used if a stable light output can be obtained.

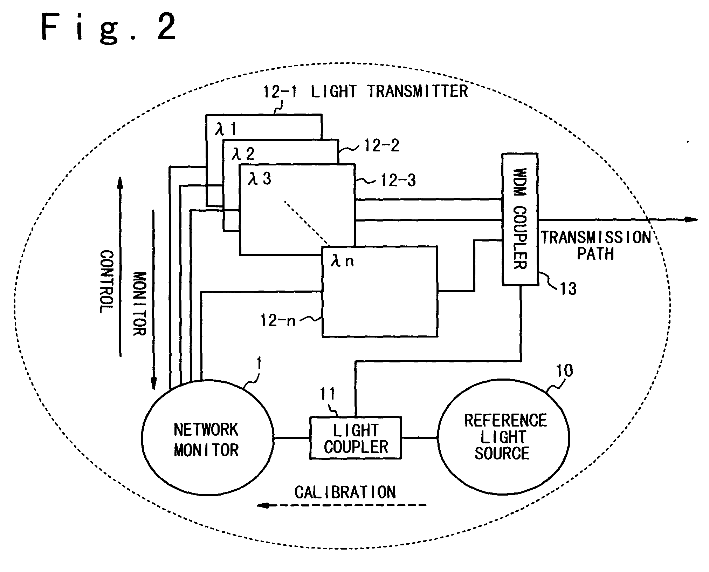

Fig. 2 is a detailed block diagram illustrating the structure of the reference terminal station A. Referring to Fig. 2, the reference terminal station A is composed of n light transmitters 12-1 to 12-n for wavelengths of λ1 to λn, the reference light source 10, a light coupler 11, the network monitor 1 and a WDM coupler 13.

The network monitor 1 is connected to the reference light source 10 through the light coupler 11. Also, the network monitor 1 is connected to the n light transmitters 12-1 to 12-n for the wavelengths of λ1 to λn, and is supplied with the data signals from the light transmitters 12-1 to 12-n. A control signal is supplied to each of the light transmitters 12-1 to 12-n from the network monitor 1. The reference light signal from the reference light source 10 is branched into two parts by the light coupler 11. One of the light output of the light coupler 11 is supplied to the network monitor 1. The other light output thereof is supplied to the WDM coupler 13. The light transmitters 12-1 to 12-n are supplied with n different transmission data to generate n light data signals, respectively. The n light data signals are supplied from the light transmitters 12-1 to 12-n to the WDM coupler 13. The WDM coupler 13 multiplexes in wavelength the light data signals from the transmitters 12-1 to 12-n and the reference light signal from the light coupler 11 to generate a transmission data light signal. The transmission data light signal is outputted from the EDM coupler 13 onto the transmission path.

The network monitor 1 of the terminal station A calibrates the network monitor 1 itself using the reference light signal supplied from the reference light source 10 through the light coupler 11 as an absolute reference. Also, the network monitor 1 performs the monitor and control of the wavelengths of the light data signals from the light transmitters 12-1 to 12-n based on the reference light signal. The calibration of the network monitor 1 is performed by a feeding back operation in the monitor 1 such that the reference wavelength of the network monitor 1 is set to 1552.46 nm, when the reference wavelength of the network monitor 1 is shifted from 1552.46 nm as an original value.

The monitor and control by the network monitor 1 based on the reference light are performed using an apparatus such as a sweep-type Michelson interferometer. Each of the light data signals from the light transmitters 12-1 to 12-n and the reference light signal from the reference light source 10 are compared by the sweep-type Michelson interferometer using the light interference. The comparing result is converted into a voltage value, and is fed back as the control signal to a temperature control circuit (not shown) of the light transmitter of each of the light transmitters 12-1 to 12-n. Thus, the temperature of a light emitting device such as a laser diode is controlled so that the wavelength of the light data signal from each of the light transmitters 12-1 to 12-n can be controlled. At this time, the light data signal from each of the light transmitters 12-1 to 12-n has a wavelength difference by a predetermined value from the reference light signal from the reference light source 10, because the light transmitters 12-1 to 12-n have respective different wavelengths. The wavelength differences from the reference light signal are predetermined and set for respective light transmitters 12-1 to 12-n.

The reference light signal from the reference light source 10 is branched by a light connector composed of the light coupler 11 and then a part of the branched reference light signal is supplied to the network monitor 1 in its own station. While calibrating the monitor itself using this reference light signal as an absolute reference, the network monitor 1 monitors and controls the wavelengths of the light data signals from the light transmitters 12-1 to 12-n. The other light output separated by the light coupler 11 is supplied to the WDM coupler 13 and multiplexed in wavelength with a light main signal by the WDM coupler 13 and then distributed to the general terminal stations. The light main signal is composed of the light data signals from the light transmitter 12-1 to 12-n.

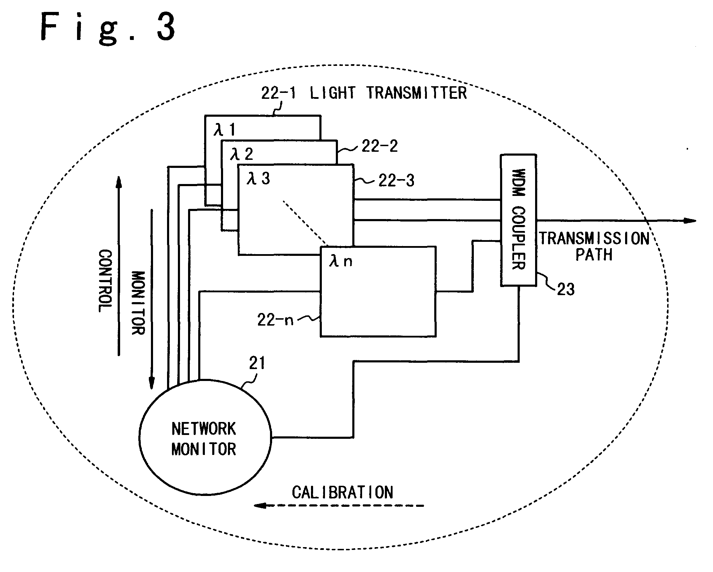

Fig. 3 is a block diagram illustrating the structure of the general terminal station. Referring to Fig. 3, each general terminal station is composed of light transmitters 22-1 to 22-n for the wavelengths of λ1 to λn, a light coupler 21, a network monitor 21 and a WDM coupler 23. Each general terminal station separates the transmission data light signal received from another general terminal station or the reference terminal station A by the WDM coupler 23 for every wavelength so that the reference light signal can be separated from the transmission data light signal. The separated reference light signal is supplied to the network monitor 21. The network monitor 21 in each terminal station operates based on this reference light signal in the same manner as the network monitor 1 of the terminal station A. Therefore, the monitor and control of the output level and wavelength of each of the light data signals become possible based on only the single reference light signal in the whole network.

More specifically, the reference light signal separated and extracted by the WDM coupler 23 and each of the light data signals from the light transmitters 22-1 to 22-n are compared by the sweep-type Michelson interferometer using the light interference. The comparing result is converted into a voltage signal and fed back to a temperature control circuit (not shown) of the light transmitter as the control signal. Thus, the temperature of the light emitting device such as a laser diode is controlled. As a result, the wavelength of the light data signal of each of the light transmitters 22-1 to 22-n can be controlled. As a result, the light data signal from each of the light transmitters 22-1 to 22-n has a wavelength difference by a predetermined value from the reference light signal from the reference light source 10.

In Fig. 1, the general terminal station C and the general terminal station D directly receive the reference light signal from the reference terminal station A. However, the general terminal station B and the general terminal station E do not directly receive the reference light signal from the reference terminal station A. The reference light signal is first supplied to the general terminal station E through the general terminal station D, and then is supplied from the general terminal station E to the general terminal station B. In this way, the general terminal station uses the supplied reference light signal for the calibration of the light transmitter in its own station, and also transmits the reference light signal to the other general terminal stations which are connected to the general terminal station itself, just as it is. Therefore, even if a new general terminal station is added or removed to or from the light wave network system, the light wave network system of the present invention can be accomplished without influence to the reference terminal station or the other general terminal stations.

Also, in the above embodiment, the case is described in which the network monitor is used for the wavelength control of the light data signal from the light transmitter. However, the transmission output level of the light data signal from the light transmitter may be automatically adjusted based on the reference light signal. Also, the signal noise ratio (SNR) of the light data signal from the light transmitter may be automatically adjusted based on the reference light signal.

In this way, according to the light wave network system of this embodiment, the network monitor in each station can be always calibrated based on only the single reference light signal. Therefore, it is possible to perform the monitor and control of the light data signals based on the single absolute reference for the whole of light wave network, resulting in realization of the stable light transmission.

It should be noted that the single reference light source in the light wave network is used in the above description. However, in consideration of cost reduction, it is not required to necessarily provide the reference light source for every network. The reference light source may be provided in another network connected to the above network, and the reference light signal from the reference light source in the other network may be used for the calibration in the above network.

As mentioned above, according to the present invention, the light signal wavelength can be precisely adjusted in the light wave network system having the plurality of nodes (terminal stations).

## Claims

1. A light wave network system comprising a plurality of terminal stations (B to E stations), wherein each of said plurality of terminal stations receives a transmission data light signal from another one of said plurality of terminal stations to separate said reference light signal, controls a wavelength of each of first light data signals based on said separated reference light signal, and multiplexes said separated reference light signal and said first light data signals to generate a transmission data light signal to output to one or more of said plurality of terminal stations.

2. A light wave network system according to claim 1, further comprising a reference terminal station (A station) which generates said reference light signal, controls a wavelength of second light data signals based on said generated reference light signal, and multiplexes said generated reference light signal and said first light data signals to generate a first transmission data light signal to output to one or more of said plurality of terminal stations other than said reference terminal station.

3. A system according to claim 1 or 2, wherein said terminal station comprises:
a plurality of light transmitters (22), each of which generates said first light data signal;
a coupler (23) for separating said reference light signal from said transmission data light signal, and multiplexing said plurality of first light data signals from said plurality of light transmitters and said separated reference light signal to generate said transmission data light signal; and
a network monitor (21) for controlling said wavelength of each of said first light data signals based on said separated reference light signal.

4. A light wave network system according to claim 3, where in said reference terminal station comprises:
a plurality of light transmitters (12), each of which generates said second light data signal;
a reference signal generator (10) for generating said reference light signal;
a coupler (13) for multiplexing said plurality of second light data signals from said plurality of light transmitters and said separated reference light signal to generate to generate said transmission data light signal;
a network monitor (1) for controlling said wavelength of each of said first light data signals based on said separated reference light signal; and
an optical brancher (11) for separating said reference light signal supply to said coupler and said network monitor.

5. A light wave network system according to claim 3, wherein said network monitor (21) receives each of said first light data signals from said plurality of light transmitters (22) and adjusts said wavelength of the received first light data signal to have a predetermined difference from a wavelength of said reference light signal.

6. A light wave network system according to claim 4, wherein said network monitor (1, 21) of each of said reference terminal station and said plurality of terminal stations receives each of said first light data signals from said plurality of light transmitters and adjusts said wavelength of the received first light data signal to have a predetermined difference from a wavelength of said reference light signal.

7. A light wave network system according to claim 6, wherein each of said plurality of terminal stations controls a transmission output power of each of said first light data signals based on said received reference light signal.

8. A light wave network system according to claim 6, wherein each of said plurality of terminal stations controls a signal noise ratio (SNR) of each of said first light data signals based on said received reference light signal such that said signal noise ratio falls within in a predetermined range.

9. A method of transmitting a light signal in a light wave network system, comprising the steps of:
in each of a plurality of terminal stations, receiving a transmission data light signal from another one of said plurality of terminal stations to separate a reference light signal from the received transmission data light signal;
controlling a wavelength of each of first light data signals based on said separated reference light signal; and
multiplexing said separated reference light signal and said first light data signals to generate a transmission data light.

10. A method according to claim 9, further comprising the step of:
generating said reference light signal.

11. A method according to claim 10, wherein said controlling step includes controlling a transmission output power of each of said first light data signals in addition of the wavelength of said first light data signal based on said received reference light signal.

12. A method according to claim 10, wherein said controlling step includes controlling a signal noise ratio of each of said first light data signals in addition of the wavelength of said first light data signal based on said received reference light signal.
